# EUROPEAN PATENT APPLICATION

(11) **EP 4 276 723 A1**
(43) Date of publication of application: **15.11.2023**
(21) Application number: 21917624.5
(22) Date of filing: 09.12.2021
(51) Int. Cl.: G06Q 30/02, G06Q 30/06

(54) **INFORMATION PROCESSING SYSTEM, INFORMATION PROCESSING DEVICE, INFORMATION PROCESSING METHOD, AND PROGRAM**

(30) Priority: 06.01.2021 JP 2021000786
(71) Applicant: Sato Holdings Kabushiki Kaisha, Tokyo 108-0023 (JP)
(72) Inventor: MATSUO, Takashi, Tokyo 108-0023 (JP); YAMADA, Keisuke, Tokyo 108-0023 (JP); SHIBATA, Takeshi, Tokyo 108-0023 (JP)
(74) Representative: Grünecker Patent- und Rechtsanwälte PartG mbB
(86) International application number: PCT/JP2021/045393
(87) International publication number: WO 2022/149403

(57) **Abstract**

An embodiment of the present invention is an information processing system comprising: a user terminal carried by a user; a communication device being attached on a product in a store and including a sensor and a storage, the sensor configured to detect a touch on the product by a person, the storage storing unique identification information; and an information processing device being capable of communicating with the user terminal. The information processing device comprises a control unit configured to, when a detecting device, which is the communication device that has detected a touch on the product by a person, is present in the store, associate user information on the user terminal positioned in proximity to the detecting device, with the identification information on the detecting device.

## Description

### FIELD

The present invention relates to an information processing system, an information processing device, an information processing method, and a program.

### BACKGROUND

Various techniques have been devised based on POS data of retail stores and customer information heretofore, in order to collect marketing data, which can be reflected in promoting sales.

In one example, a server including a membership customer database, a user database, and a POS database is known (e.g., Japanese Unexamined Patent Application Publication No. 2007-094592). The membership customer database holds attributes of each individual membership customer. The user database holds information related to members who have applied for service. The POS database stores POS data of each retail store. For simultaneously purchased products that have a strong correlation with calendar information, the server extracts a combination of the simultaneously purchased products and the calendar information in association with each other.

### BRIEF SUMMARY

### TECHNICAL PROBLEM

POS data of a retail store provides information on products that customers purchased, but it does not provide information on products that customers did not purchase. For example, in a case in which a customer did not purchase a product, POS data does not provide information such that the customer was not interested in the product or the customer did not purchase the product although having had an interest therein. However, such pieces of information can be marketing information useful for manufacturers of products.

In view of this, an object of the present invention is to understand user behavior toward products.

### SOLUTION TO PROBLEM

An embodiment of the present invention provides an information processing system including a user terminal, a communication device, and an information processing device. The user terminal carried by a user. The communication device is attached on a product in a store and includes a sensor and a storage. The sensor is configured to detect a touch on the product by a person. The storage stores unique identification information. The information processing device is capable of communicating with the user terminal. The information processing device includes a control unit being configured to, when a detecting device, which is the communication device that has detected a touch on the product by a person, is present in the store, associate user information on the user terminal positioned in proximity to the detecting device, with the identification information on the detecting device.

### ADVANTAGEOUS EFFECTS

An embodiment of the present invention enables understanding user behavior toward products.

### BRIEF DESCRIPTION OF DRAWINGS

FIG. 1 schematically shows a system configuration of a user behavior tracking system of a first embodiment in a situation in which a user is in a store.
FIG. 2 is a plane view of an exemplary communication device.
FIG. 3 is a plan view of an exemplary store.
FIG. 4 schematically shows a system configuration of the user behavior tracking system of the first embodiment in a situation in which a user is at home.
FIG. 5 is a block diagram of each device included in the user behavior tracking system of the first embodiment.
FIG. 6 is a block diagram of each device included in the user behavior tracking system of the first embodiment.
FIG. 7 shows an example of data components of a user position dataset.
FIG. 8 shows an example of data components of a product database.
FIG. 9 shows an example of data components of a user profile database.
FIG. 10 shows an example of data components of a user behavior database.
FIG. 11 is a sequence chart showing an operation of the user behavior tracking system of the first embodiment.
FIG. 12 is a sequence chart showing an operation of the user behavior tracking system of the first embodiment.
FIG. 13 is a sequence chart showing an operation of the user behavior tracking system of the first embodiment.
FIG. 14 schematically shows a system configuration of the user behavior tracking system of a second embodiment in a situation in which a user is in a store.
FIG. 15 schematically shows a system configuration of the user behavior tracking system of the second embodiment in a situation in which a user is at home.
FIG. 16 is a block diagram of each device included in the user behavior tracking system of the second embodiment.
FIG. 17 is a sequence chart showing an operation of the user behavior tracking system of the second embodiment.
FIG. 18 is a sequence chart showing an operation of the user behavior tracking system of the second embodiment.
FIG. 19 is a sequence chart showing an operation of the user behavior tracking system of the second embodiment.

### DETAILED DESCRIPTION

Hereinafter, a user behavior tracking system of an embodiment of an information processing system of this disclosure will be described with reference to the attached drawings. The user behavior tracking system allows understanding user behavior toward products, for example, in retail stores such as supermarkets and household goods stores or in the user's home (at home).

The user behavior tracking system obtains position information on a user in a store, based on radio waves emitted from a user terminal carried by the user. Products that are sold in the store are attached with a communication device having a sensor that detects a touch of a person. The user behavior tracking system identifies a communication device that has detected a touch of a person (detecting device) among the communication devices attached on products in the store. The user behavior tracking system then associates user information (e.g., a user ID) on a user terminal positioned in proximity to the detecting device, with identification information on the detecting device. This enables recognizing whether a user picks up a certain product in the store. The product that the user has picked up in the store is presumed to be of interest to the user, and therefore, associating the product with a profile of the user can provide useful marketing data.

In the case in which a user has purchased a product attached with a detecting device, the user behavior tracking system of an embodiment can detect a touch on the purchased product by the user, whereby it is possible to track a state of use of the purchased product by the user at home.

### (1) First Embodiment

### (1-1) System Configuration of User Behavior Tracking System of this Embodiment

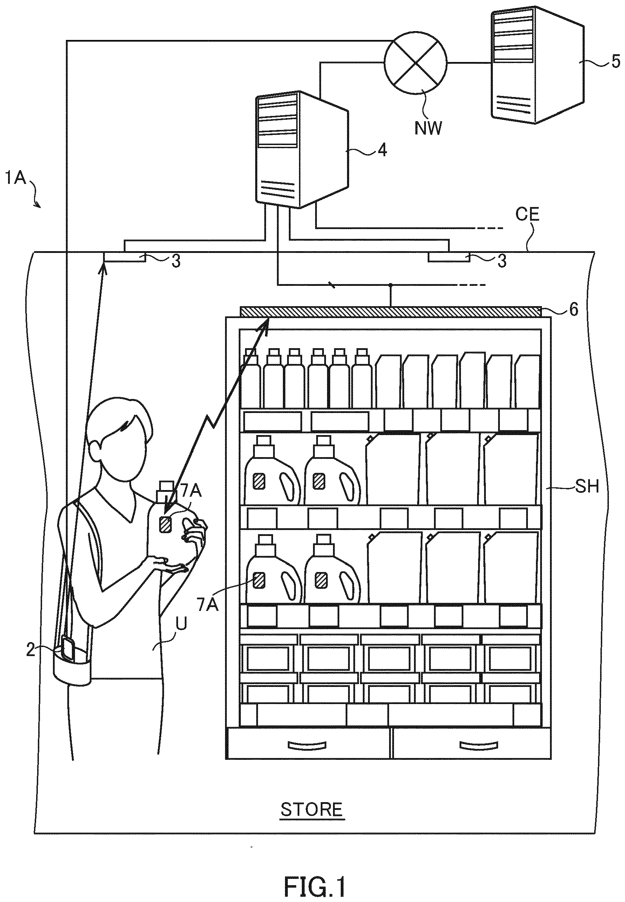

First, a system configuration of a user behavior tracking system 1A of this embodiment will be described with reference to FIGs. 1 to 4.

FIG. 1 schematically shows a system configuration of the user behavior tracking system 1A of this embodiment. The user behavior tracking system 1A of this embodiment in FIG. 1 is installed in order to understand user behavior in a store that sells, for example, consumer goods such as cosmetics and seasonings, as products.

Each product in the store is attached with a communication device 7A for detecting a touch of a person. In the following description, a communication device that has detected a touch of a person may be represented as a "detecting device."

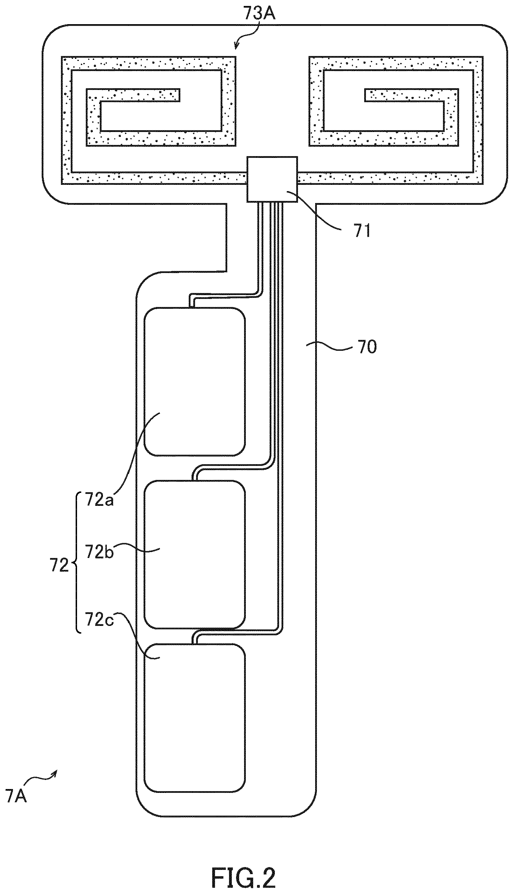

FIG. 2 shows an exemplary communication device 7A. The communication device 7A is a thin-film device having a control unit 71 composed of an IC chip, a touch detector 72 functioning as a sensor for detecting a touch of a person, and a radio tag 73A. The control unit 71 and the radio tag 73A function as a passive tag or an active tag. The communication device 7A can be shaped to fit to the shape of a product, for example. In the following description, reading the radio tag 73A of the communication device 7A may be simply expressed as "reading the communication device 7A," as appropriate.

The control unit 71 has a built-in memory in which a device ID (an example of unique identification information) for identifying the communication device 7Ais written. The control unit 71 has a microcontroller and monitors a detection value from the touch detector 72.

In a case in which the communication device 7A functions as a passive tag, the control unit 71 generates a reflected wave from the radio tag 73A with respect to a radio wave from an in-store reader 6, contain a transmission signal having a device ID and information indicating detection or non-detection of a touch of a person. In a case in which the communication device 7A functions as an active tag, the control unit 71 generates a transmission radio wave contain a transmission signal having a device ID and information indicating detection or non-detection of a touch of a person.

The touch detector 72 can be any type of sensor that is able to detect a touch of a person. For example, a capacitive sensor that detects variations in capacitance between electrodes due to a touch of a person may be used. However, any sensor such as an acceleration sensor or a pressure sensitive sensor may also be used. In one example in which the touch detector 72 uses an acceleration sensor, an acceleration of a predetermined value or greater is detected when a product is lifted, whereby it is possible to detect that a user holds the product or a person touches the product.

The radio tag 73A is an RFID tag that performs wireless communication in, for example, a UHF band (860 to 960 MHz).

The position of the communication device 7A attached on a product is not limited, but it is preferably a position that causes a user to touch it when the user picks up the product. In one example, for a container product containing contents, such as a cosmetic item, the communication device 7A is preferably attached on a grip or a cap of a container body.

In the example in FIG. 2, the touch detector 72 includes a first detecting unit 72a, a second detecting unit 72b, and a third detecting unit 72c. The first detecting unit 72a, the second detecting unit 72b, and the third detecting unit 72c are provided at a sensor arrangement part 70 of the communication device 7A and detect a touch of a person independently from each other.

Although it is not necessary for the touch detector 72 to be provided with a plurality of independent detecting units, providing a plurality of independent detecting units enables detecting an open action. For example, the sensor arrangement part 70 may be attached on a cap of a container product. In this state, it is possible to detect that the cap is removed from a container body (that is, an open action).

In one case, the first detecting unit 72a and the second detecting unit 72b in the sensor arrangement part 70 are disposed at a cap, whereas the third detecting unit 72c in the sensor arrangement part 70 is disposed at a container body in the example in FIG. 2. With this configuration, when the cap is removed from the container body for the first time, a wire connecting the third detecting unit 72c and the control unit 71 is broken, and the control unit 71 detects opening of the product due to occurrence of breaking of the wire.

In a state in which the wire is disconnected between the third detecting unit 72c and the control unit 71, the third detecting unit 72c cannot detect a touch of a person anymore, but the first detecting unit 72a and the second detecting unit 72b, which are not disconnected from the control unit 71, can still detect a touch of a person.

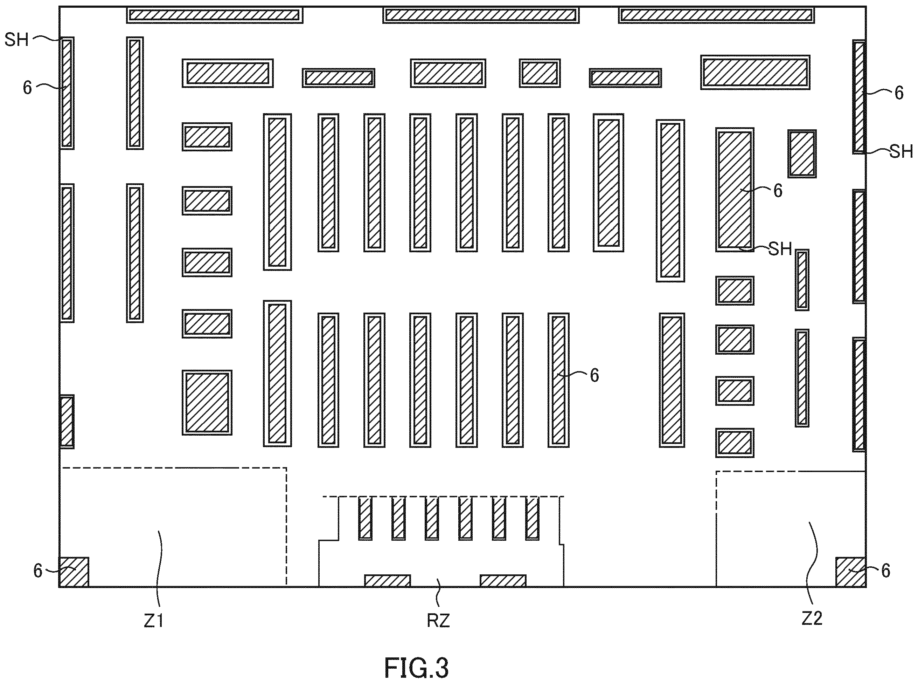

As shown by the example in FIG. 3, an in-store reader 6 is disposed on each product shelf SH in a store.

The in-store reader 6 receives a radio wave from a communication device 7A, which is attached on each product arranged on a corresponding product shelf SH, and it then obtains information from the communication device 7A.

The in-store reader 6 includes a memory that stores a device ID of a communication device 7A disposed on a corresponding product shelf SH. The in-store reader 6 notifies an edge device 4 of a device ID of each communication device 7A and information on whether a person has touched each communication device 7A, based on a transmission signal from each communication device 7A disposed on a corresponding product shelf SH.

For example, a user picks up a product from a product shelf SH, or a user takes a product to a checkout counter in order to purchase it. In such cases, the in-store reader 6 cannot receive a transmission signal from the communication device 7A attached on the product and is not able to notify the edge device 4 of the device ID of the communication device 7A. Thus, it is recognized that the product is no longer on the product shelf SH.

A location where the in-store reader 6 is disposed in the store is not limited to a product shelf SH, and it may be an ordinary checkout counter (manned cash register) at which a store staff performs a payment process in the store, a self-checkout counter at which a user operates to perform a payment process by himself or herself, or a predetermined spot outside the store.

In one example, with reference to FIG. 3, the in-store reader 6 is set up on each product shelf SH in a selling section and is also set up in a checkout zone RZ, and moreover, it is placed in each of entrance/exit zones Z1 and Z2, which are substantially outside the store.

The in-store readers 6, which are disposed at the checkout counters and in the entrance/exit zones, can receive a transmission signal of a communication device 7A attached on a product, when a user brings the product to the checkout counter or when a user has purchased the product and takes it out to the outside of the store. Thus, it can be recognized whether the product is at the checkout counter or at the entrance/exit. The position of a product and position information on a user are associated with each other, whereby the user behavior related to the product (e.g., whether the user returns the product to a product shelf after picking it up, or whether the user has purchased the product after picking it up) can be tracked.

Non-limiting examples of the user terminal 2, which is carried by a user, include a smartphone and a tablet terminal, but a laptop personal computer may also be used. The user terminal 2 is installed with a user application. The user application of the user terminal 2 is capable of communicating with an application server 5 via a network NW.

The network NW is, for example, a local area network (LAN), a wide area network (WAN), or the Internet, but not limited to them.

In an embodiment, the user terminal 2 executes the user application to function as, for example, a BLE tag. In this case, a beacon signal that is transmitted from the user terminal 2 contains a user ID (an example of user information) for identifying a user on the user application. BLE stands for Bluetooth Low Energy and is a communication standard of Bluetooth (registered trademark) designed for power saving. The user terminal 2, which functions as a BLE tag, transmits a BLE beacon (hereinafter referred to as a "beacon signal").

One or more receivers 3 (locators) are disposed in the store in order to identify the position of the user terminal 2 in the store. The receiver 3 is installed, for example, on a ceiling CE of the store. The receiver 3 receives a beacon signal, which is transmitted from the user terminal 2 moved in the store, and it measures an incident angle of the radio wave of the beacon signal.

The edge device 4 is an example of a set of an information processing device and a position identification device that are provided in the store. The edge device 4 is capable of communicating with each in-store reader 6 in the store and with each receiver 3 in the store by wired or wireless communication via a LAN in the store. In addition, the edge device 4 is capable of communicating with the application server 5 via the network NW. The edge device 4 may be, for example, a general-purpose computer device.

The edge device 4 determines the position (position in a plane) in the store of the user terminal 2 by using an angle-of-arrival (AOA) method, based on an incident angle measured by the receiver 3. The receiver 3 may be set up on a back side of the ceiling CE, unlike the case in FIG. 2.

The position of the user terminal 2 can be estimated only by single receiver 3. However, from the point of view of enhancing positioning accuracy, it is preferable to install more receivers 3 in accordance with the degree of a received signal strength indicator (RSSI) of a beacon signal that is transmitted from the user terminal 2, a store floor area, and a radio wave environment in the store. The method of positioning the user terminal 2 is not limited to an AOA method, and another method, such as a time-of-arrival (TOA) method, may be used.

The edge device 4 transmits a touch notification and a purchase notification to the application server 5, based on a device ID of each communication device 7A and information on whether a person has touched a product, which are received from each in-store reader 6, and based on position information on each user in the store. The touch notification is made to notify that a user has touched a communication device 7A, and it contains a user ID and a device ID. The purchase notification is made to notify that a user has purchased a product attached with a communication device 7A, and it contains a user ID and a device ID.

The application server 5 executes a process in response to a request from the user application of the user terminal 2 and then provides a predetermined service to the user terminal 2. For example, in response to receiving a touch notification from the edge device 4, the application server 5 provides detailed information on a product attached with the communication device 7A of a device ID contained in the touch notification, to the user application of the user ID contained in the touch notification. Although details will be described later, the application server 5 stores a product database in which a product code for identifying a product and a device ID of a communication device 7A attached on the product are associated with each other.

The application server 5 may provide an electronic coupon to the user application in accordance with a state of use of a product by a user.

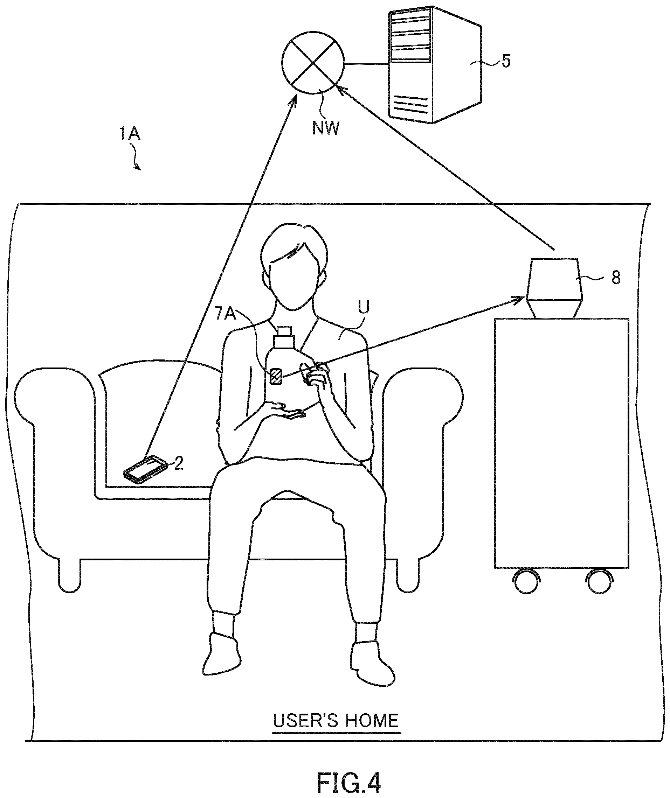

FIG. 4 schematically shows a system configuration of the user behavior tracking system 1A in a situation in which a user has brought a product home after purchasing it in the store.

Although the user is at home, the user terminal 2 is capable of communicating with the application server 5 via the network NW, in the same manner as in FIG. 1. In this embodiment, an in-home reader 8 is provided in the home of a user "U." The in-home reader 8 is capable of communicating with the application server 5 via the network NW. Such an in-home reader 8 is provided in order to track a state of use of a purchased product by the user "U." A store may lend an in-home reader 8 to the user.

The in-home reader 8 receives a radio wave from a communication device 7A, which is attached on a product used at home by the user "U." The in-home reader 8 transmits a notice to the application server 5 via the network NW each time it obtains information from the communication device 7A. A user touches a product each time the user uses it, and therefore, the number of times of use or the frequency of use of the product by the user can be tracked based on information from the communication device 7A.

### (1-2) Configuration of each Device of User Behavior Tracking System 1A

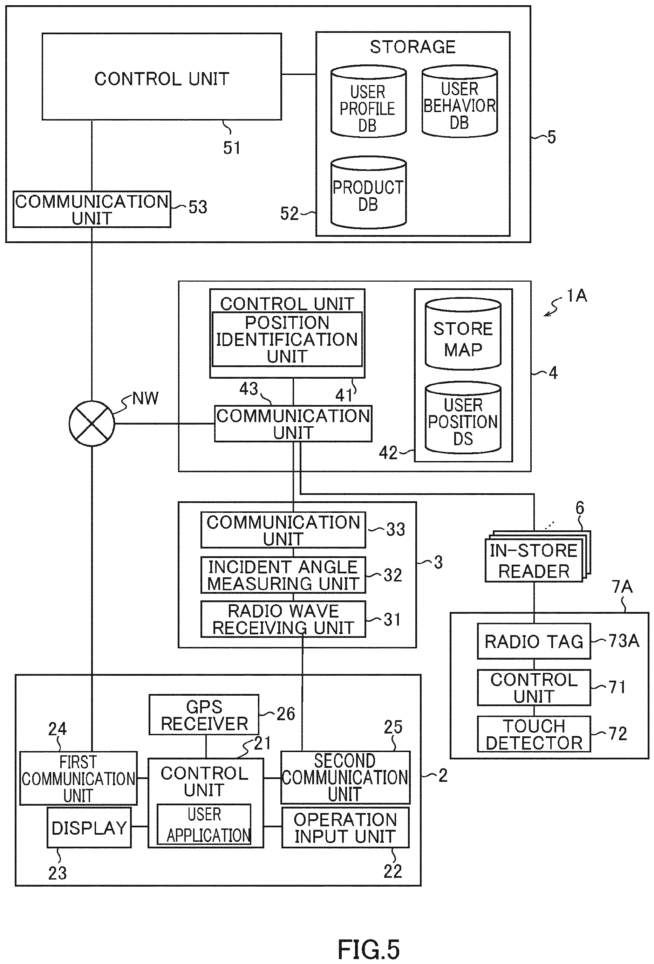

Next, a configuration of each device of the user behavior tracking system 1A will be described with reference to FIGs. 5 to 10.

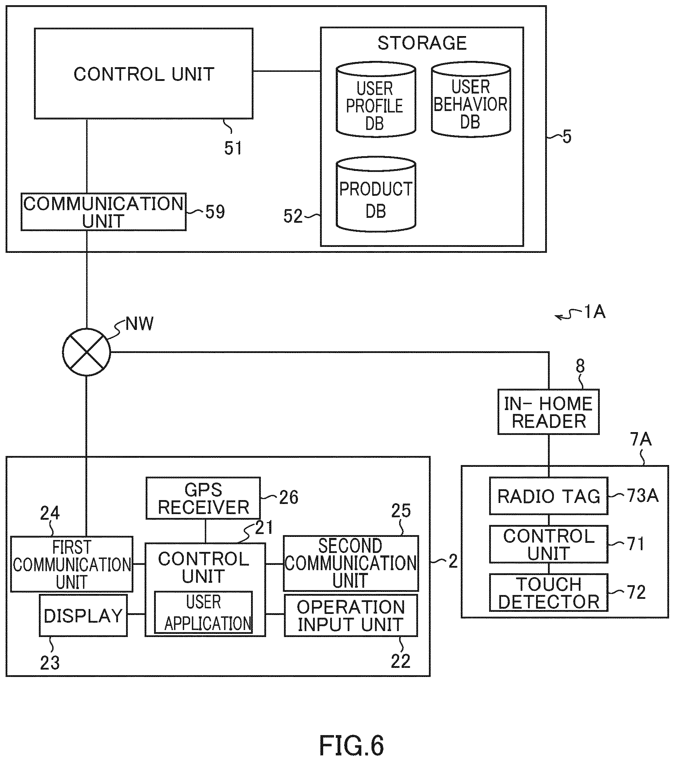

Each of FIGs. 5 and 6 is a block diagram of each device included in the user behavior tracking system 1A of this embodiment. FIG. 5 shows a part corresponding to FIG. 1 of the user behavior tracking system 1A, whereas FIG. 6 shows a part corresponding to FIG. 4 of the user behavior tracking system 1A.

As shown in FIG. 5, the user terminal 2 includes, for example, a control unit 21, an operation input unit 22, a display 23, a first communication unit 24, a second communication unit 25, and a GPS receiver 26.

The control unit 21 is composed mainly of a microprocessor and controls the whole user terminal 2. For example, the control unit 21 executes the user application. In one example, the user application communicates with the application server 5 to obtain information on a product and causes the display 23 to show the information. The user application controls the first communication unit 24 so that the user terminal 2 will function as a BLE tag. In communicating with the application server 5, the user application is associated with a user ID corresponding to the user terminal 2.

The operation input unit 22 is an input interface that receives operation input from a user who operates to execute each program, and it may be a touch panel input unit provided to a display panel of the display 23.

The display 23 includes a display panel, such as an LCD, and a driving circuit for the display panel, and it displays a result of executing a program by the control unit 21.

The first communication unit 24 wirelessly communicates with another device, for example, in a communication range narrower than that of the second communication unit 25, and it transmits a beacon signal, as described above. The beacon signal contains a user ID corresponding to the user application.

The second communication unit 25 is a communication interface for communicating with the application server 5, for example, via one or both of a mobile communication network (not shown) and the network NW.

The GPS receiver 26 receives a global positioning satellite (GPS) signal and measures a position of the user terminal 2.

As shown in FIG. 5, the receiver 3 is composed mainly of a microprocessor and includes a radio wave receiving unit 31, an incident angle measuring unit 32, and a communication unit 33.

The radio wave receiving unit 31 includes an antenna for receiving a beacon signal (radio wave) that is transmitted from the user terminal 2.

The incident angle measuring unit 32 measures an incident angle of a radio wave that the radio wave receiving unit 31 receives from the user terminal 2.

The communication unit 33 is an interface for communicating with the user terminal 2 and the edge device 4. In one example, the communication unit 33 demodulates a signal received from the user terminal 2. In addition, the communication unit 33 transmits information on an incident angle, which is measured by the incident angle measuring unit 32, to the edge device 4, in such a manner that the information is association with a device ID contained in a beacon signal. The communication between the receiver 3 and the edge device 4 may be wired or wireless.

As shown in FIG. 5, the edge device 4 includes a control unit 41, a storage 42, and a communication unit 43.

The control unit 41 is composed mainly of a microprocessor and controls the whole edge device 4.

The storage 42 includes a large-scale storage device, such as a hard disk drive (HDD), and it stores a store map and a user position dataset (user position DS).

The communication unit 43 includes a communication interface for communicating with the receiver 3 and the in-store reader 6, for example, via the store LAN, and it also includes a communication interface for communicating with the application server 5 via the network NW.

In one example, the microprocessor executes a predetermined program to cause the control unit 41 to function as a position identification unit. Specifically, the position identification unit identifies a position of the user terminal 2 based on information on an incident angle of a beacon signal, which is received from the receiver 3. More specifically, in a case of using the AOA method as described above, a position in a store area (XY-coordinate position in a store floor) of the user terminal 2 in accordance with elapse of time is identified (measured) based on a known position in the store of the receiver 3 and based on information on an incident angle. The known position is a three-dimensional coordinate position relative to a predetermined position in the store. The incident angle represents an arrival direction of a radio wave from the user terminal 2 and is sequentially obtained from the receiver 3. Although being able to be freely set, the interval of positioning the user terminal 2 may be set to a time necessary to accurately track the position of the user terminal 2 (e.g., several hundreds of milliseconds or less).

The control unit 41 includes, for example, a real-time clock as a time counting means.

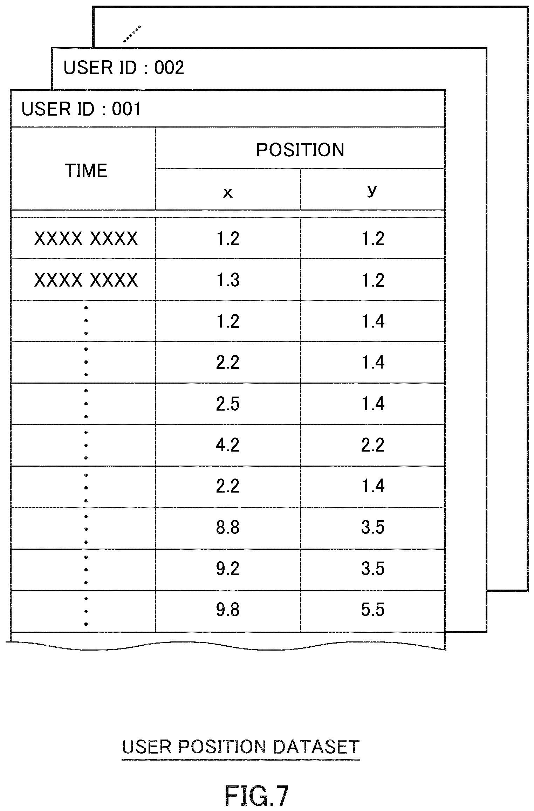

The control unit 41 sequentially records position data that indicates a position of the user terminal 2 at the time of performing positioning (at a positioning time), in the user position dataset in the storage 42, with respect to each user ID. An example of data components of the user position dataset is shown in FIG. 7.

In response to the microprocessor executing a predetermined program, the control unit 41 associates a user ID with a device ID of a communication device 7A attached on a product in the store.

A user ID and a device ID can be associated with each other by (I) a touch action-based association process, or (II) a purchase action-based association process.

### (I) Touch Action-based Association Process

The touch action-based association process is a process that, when a detecting device 7A, which has detected a touch on a product by a person, is present in the store, associates a user ID of a user terminal 2 positioned in proximity to the detecting device 7A, with a device ID of the detecting device 7A.

For example, the control unit 41 determines whether a detecting device, which is a communication device 7A that has detected a touch on a product by a person, is present in the store, based on information from each in-store reader 6 in the store. In a state in which the detecting device is present in the store, the control unit 41 refers to the user position dataset to determine whether a user terminal 2 of one of user IDs is positioned in proximity to the detecting device.

Position information on each in-store reader 6 that is disposed in the store is described in the store map stored in the storage 52. The position of the detecting device can be presumed to be the same as the position of the in-store reader 6 disposed on a product shelf SH at which the detecting device is managed. In view of this, the control unit 41 compares the position of the detecting device and the position of the user terminal 2 corresponding to the user ID, at the identical time, with each other, whereby it is possible to determine whether a user terminal 2 of one of user IDs is positioned in proximity to the detecting device.

In order to determine that "the user terminal 2 is in proximity to the detecting device," the degree of closeness of the user terminal 2 to the detecting device can be evaluated as follows. A predetermined value is preset so as to prevent incorrect detection, in consideration of, for example, a distance between adjacent product shelves in the store. The predetermined value is compared with a distance between the user terminal 2 and the detecting device. Then, in a case in which the distance is equals to the predetermined value or less, it is determined that the user terminal 2 is positioned in proximity to the detecting device. When a plurality of user terminals 2 are positioned in proximity to the detecting device, a user terminal 2 in which the distance is shortest may be identified.

A user terminal 2 may be identified based on a stay time of the user terminal 2 positioned in proximity to the detecting device. For example, a user terminal 2 that is positioned (stays) close to a product shelf for a predetermined time or more, is identified, whereas a consumer terminal 2 that has simply passed by a product shelf is not identified.

Alternatively, a user terminal 2 may be identified based on a parameter such as a relationship between a detection time and a stay time, such as whether the user terminal 2 stays close to a product shelf for a predetermined time or more from the detection time when the communication device 7A detects a touch on a product by a person.

In a state in which a detecting device, which is a communication device having detected a touch on a product by a person, is present in the store, the in-store reader 6 may fail to read the detecting device, and a user terminal 2 that is positioned in proximity to the detecting device may be separated from the in-store reader 6, substantially at the same time. In this case, the touch action-based association process may be performed. In this situation, it is presumed that the product is lifted into the air, that is the product is held by a person. This enhances accuracy of the touch action-based association process. In more detail, a communication device 7A of a product may detect a touch of a person even when a user unintentionally touches the product or a user's hand comes close to the product. In this case, there is a possibility that the user is determined to be interested in the product in spite of actually having no interest in the product. In view of this, it is determined whether a user obviously takes out a product from a product shelf (or holds the product) and leaves the product shelf together with the product. This enables more reliably determining whether the user is interested in the product.

The control unit 41 transmits a touch notification that contains a user ID and a device ID associated with each other as a result of the touch action-based association process, to the application server 5.

### (II) Purchase Action-based Association Process

The purchase action-based association process is a process performed when a user terminal 2 and a detecting device are located outside the store. In this process, it is determined that a user carrying the user terminal 2 has purchased the product, which is attached with the detecting device, and a user ID of the user terminal 2 and a device ID of the detecting device are associated with each other.

In one example, a user terminal 2 is located in the entrance/exit zone Z1 or Z2 (refer to FIG. 3) at the same time as the in-store reader 6 disposed in the entrance/exit zone Z1 or Z2 reads the detecting device, and a user ID of the user terminal 2 is identified. In this situation, it is determined that a user corresponding to the user ID has purchased a product attached with the detecting device. Then, the user ID and a device ID of the detecting device are associated with each other.

In order to purchase a product, a user needs to pick up the product and make a payment at a checkout counter. In consideration of this, association accuracy can be improved by adding a condition that at least one of the following states (i) and (ii) is satisfied, as a determination condition.
(i) The same user ID and the same device ID are already associated with each other by the touch action-based association process.
(ii) The user terminal 2 of the same user ID is located in the checkout zone RZ (refer to FIG. 3) at the same time as the in-store reader 6 disposed in the checkout zone RZ reads the same detecting device.

The control unit 41 transmits a purchase notification that contains a user ID and a device ID associated with each other as a result of the purchase action-based association process, to the application server 5.

As shown in FIG. 5, the application server 5 includes, for example, a control unit 51, a storage 52, and a communication unit 53.

The control unit 51 is composed mainly of a microprocessor and controls the whole application server 5.

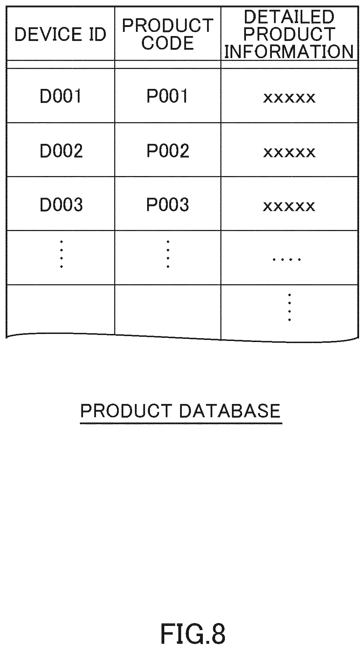

The storage 52 includes a large-scale storage device, such as an HDD, and it stores a product database (product DB), a user profile database (user profile DB), and a user behavior database (user behavior DB), which are respectively shown by the examples in FIGs. 8 to 10.

The communication unit 53 is a communication interface for communicating with the edge device 4 and the user terminal 2.

In the product database illustrated in FIG. 8, a device ID of a communication device 7A attached on a product, a product code of the product, and detailed information on the product (detailed product information) are associated with each other.

The user profile database contains data such as a profile and attributes of each user using the store, and it is prepared as a reference for profile data of a user who is interested in a certain product or of a user who purchased a certain product. Useful marketing data can be obtained by referring to a profile of a user.

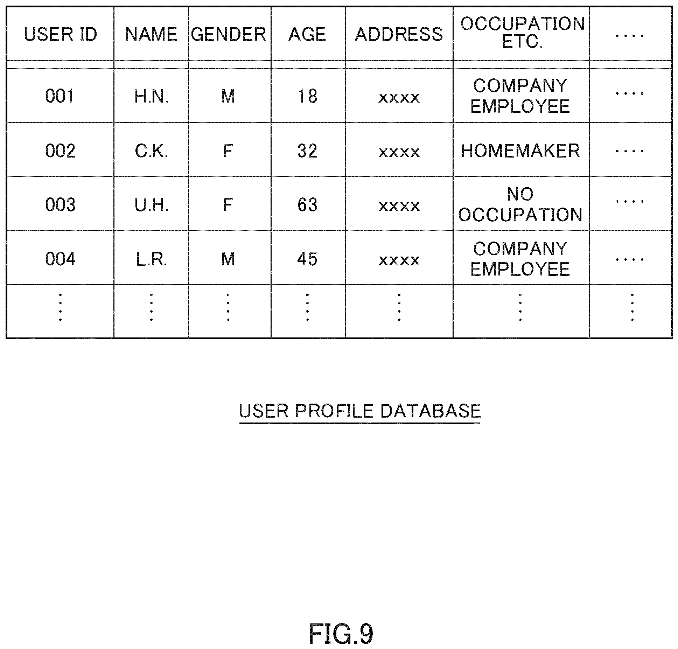

Each record of the user profile database illustrated in FIG. 9 includes a value of each of these fields: for example, "USER ID," "NAME," "GENDER," "AGE," "ADDRESS," and "OCCUPATION, ETC." The field can be added, changed, deleted, or the like, as appropriate.

The user behavior database is a database that represents a list of touched products and purchased products of each user.

The touched product means a product that a user has touched. For a user of a user ID contained in a touch notification that is received from the edge device 4, a product that is attached with a communication device 7A of a device ID contained in the touch notification corresponds to a touched product. On the basis of the product database, in which a device ID and a product code are associated with each other, a product code of a touched product with respect to a user ID is identified.

The purchased product means a product that a user has purchased. For a user of a user ID contained in a purchase notification that is received from the edge device 4, a product that is attached with a communication device 7A of a device ID contained in the purchase notification corresponds to a purchased product. On the basis of the product database, in which a device ID and a product code are associated with each other, a product code of a purchased product with respect to a user ID is identified.

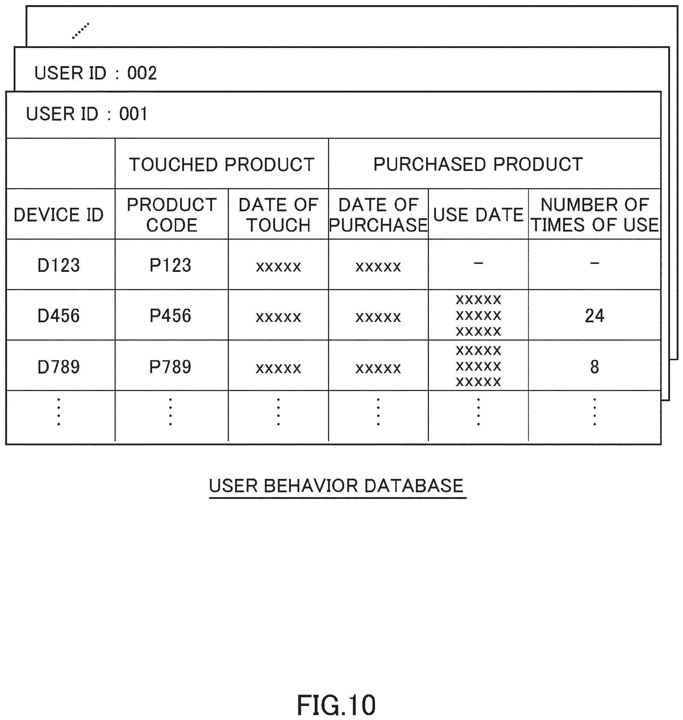

The user behavior database illustrated in FIG. 10 contains a value of each of the following fields with respect to each user ID: a product code and a date of touch of a touched product corresponding to a device ID, a date of purchase, a use date, and the number of times of use. The date of touch and the date of purchase are, for example, the day and time a touch notification and a purchase notification are received, respectively, but they are not limited thereto. The edge device 4 may transmit a touch notification and a purchase notification by respectively adding a date of touch and a date of purchase thereto. In this case, the data of date contained in the touch notification and in the purchase notification may be reflected in the user behavior database.

In the user behavior database, instead of or in addition to the "NUMBER OF TIMES OF USE" field, a "FREQUENCY OF USE" field may be provided.

In response to the microprocessor executing a predetermined program, the control unit 51 updates the user behavior database based on a touch notification and a purchase notification received from the edge device 4 and based on a use notification (described later) received from the in-home reader 8.

With reference to FIG. 6, the in-home reader 8 receives a transmission signal including a device ID and information indicating detection or non-detection of a touch of a person, from the communication device 7A at a user's home. In a case in which the transmission signal contains information indicating detection of a touch of a person, the in-home reader 8 transmits a use notification containing a user ID and a device ID, to the application server 5. The in-home reader 8 that is disposed at each user's home is associated with a user ID of a corresponding user, and the use notification that is transmitted from the in-home reader 8 contains the user ID associated with the source in-home reader 8.

Upon receiving a use notification from the in-home reader 8 of a user, the control unit 51 of the application server 5 updates the value in the "NUMBER OF TIMES OF USE" field corresponding to the user ID and the device ID, in the user behavior database. For a user behavior database having a "FREQUENCY OF USE" field, the control unit 51 updates the value in the "FREQUENCY OF USE" field based on the received use notification.

In response to the microprocessor executing a server program, the control unit 51 notifies a result of the execution to the user application of the user terminal 2. For example, upon receiving a touch notification from the edge device 4, the control unit 51 refers to the product database (FIG. 8) and transmits detailed product information on a product code corresponding to the device ID contained in the touch notification, to the user application of the user ID contained in the touch notification. This makes it possible to timely provide the user with information on a product that the user has picked up with an interest in the store.

In an embodiment, the purchase action-based association process may be performed by the application server 5.

For example, a user terminal 2 and a detecting device are located at a place that is associated with a user ID in advance. In this case, it may be determined that a user carrying the user terminal 2 has purchased a product, which is attached with the detecting device, and the user ID of the user terminal 2 and a device ID of the detecting device may be associated with each other.

The "place that is associated with a user ID in advance" is, for example, a user's address contained in the user profile database. In this case, the user application of the user terminal 2 transmits position information, which is obtained by the GPS receiver 26, to the application server 5, for example, each time the user application is activated. The application server 5 determines whether the user terminal 2 is located at the address of a corresponding user ID, based on the position information on the user terminal 2 acquired from the user application.

In addition, when receiving a use notification from the in-home reader 8, the application server 5 may determine that a communication device 7A of a device ID contained in the use notification is located at the address corresponding to a user ID contained in the use notification.

### (1-3) Operation of User Behavior Tracking System of This Embodiment

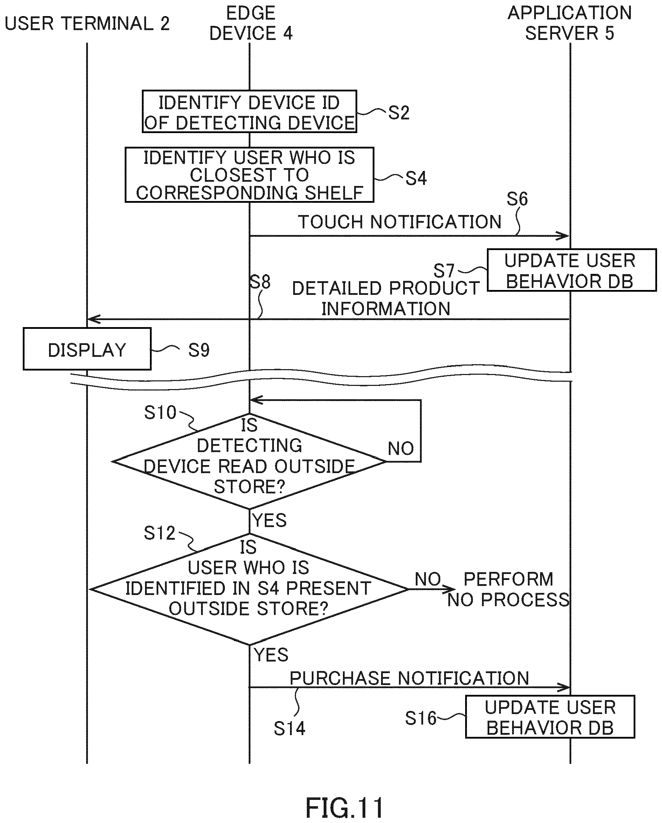

Next, an operation of the user behavior tracking system 1A of this embodiment will be described with reference to FIGs. 11 to 13.

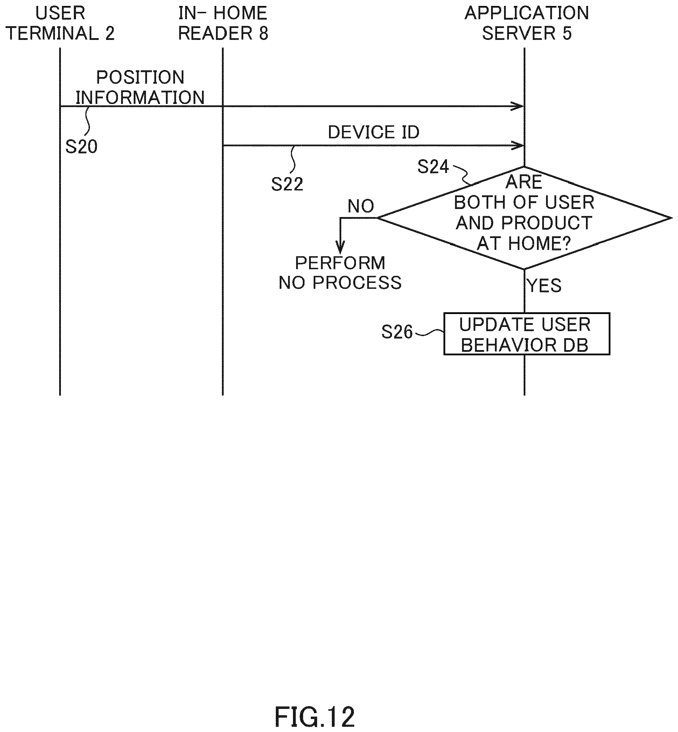

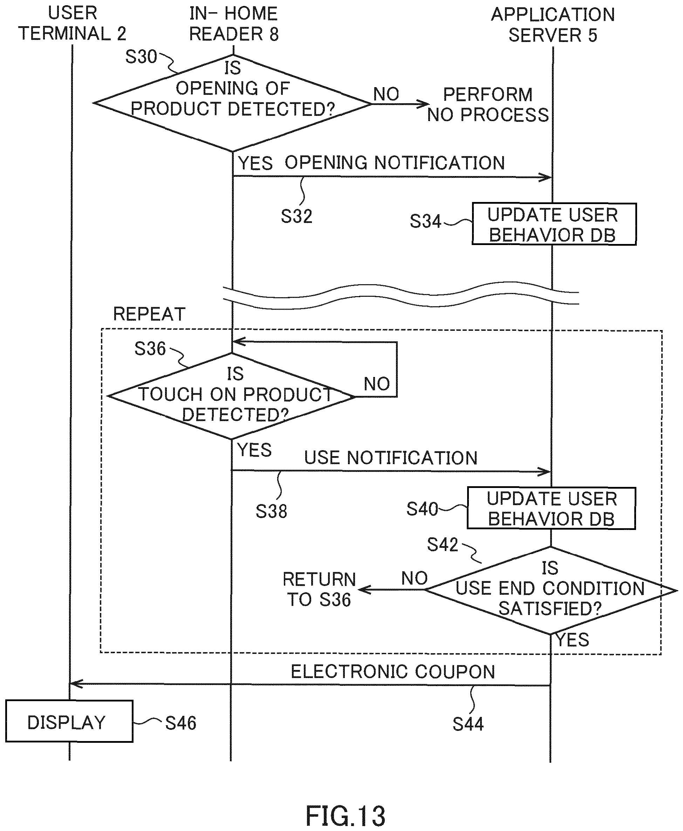

FIG. 11 is a sequence chart showing an operation of the user behavior tracking system 1A when a user has picked up a product in the store and when the user has purchased the product. FIG. 12 is a sequence chart in a case in which the application server 5 determines that a user has purchased a product, which is different from that in FIG. 11. FIG. 13 is a sequence chart of the user behavior tracking system 1A in a case of monitoring a state of use of a product that is purchased by a user.

### (A) Operation in Store (FIGs. 11 and 12)

In the store, the in-store reader 6 for a product shelf sequentially notifies the edge device 4 of a device ID of each communication device 7A and information on whether a person has touched each communication device 7A, based on a transmission signal from each communication device 7A attached on a product disposed on the product shelf.

Upon identifying the device ID of a communication device 7A that has detected a touch of a person (detecting device) (step S2), the edge device 4 refers to the user position dataset to identify a user ID of a user who has been closest to a product shelf at which the detecting device is disposed, at the same time (timing) as the detecting device has detected the touch of a person (step S4). In one example in which a plurality of users are present close to the detecting device at that time, a user ID of a user who is closest to the detecting device is identified among the plurality of users. The edge device 4 associates the device ID of the detecting device with the identified user ID.

The edge device 4 transmits a touch notification that contains the user ID and the device ID, which are associated with each other, to the application server 5 (step S6). Upon receiving the touch notification, the application server 5 refers to the product database to identify a product code corresponding to the device ID contained in the touch notification, and updates the user behavior database based on the user ID contained in the touch notification and the identified product code (step S7). Specifically, a value is written in each field of the device ID, the product code of the touched product, and the date of touch in a new record, in the user behavior database.

Then, the application server 5 reads detailed product information corresponding to the product code of the touched product from the product database and transmits it to the user application of the corresponding user ID (step S8). The user application displays the detailed product information on the user terminal 2 (step S9). This makes it possible for a user to timely check the detailed information on the product that the user himself or herself has picked up with an interest.

Whether the user has purchased the product after picking it up, can be determined based on whether both of the user and the product are located outside the store. Specifically, when the detecting device that is identified in step S2 is read by the in-store reader 6 disposed in the entrance/exit zone Z1 or Z2 (refer to FIG. 3), which is substantially outside the store (step S10: YES), the product that is attached with the detecting device is determined as being outside the store. Moreover, when the user terminal 2 of the user ID that is identified in step S4 is located in the entrance/exit zone Z1 or Z2 at the same time as the in-store reader 6 reads the detecting device in the entrance/exit zone Z1 or Z2, a user corresponding to the user ID is also determined as being outside the store (step S12: YES). Upon determining that the user has purchased the product, the edge device 4 transmits a purchase notification that contains the user ID and the device ID of the detecting device in an associated manner, to the application server 5 (step S14).

The application server 5 that has received the purchase notification updates the user behavior database based on the user ID and the device ID contained in the purchase notification (step S16). Specifically, a value is written in each field of the product code of the purchased product and the date of purchase in the user behavior database.

FIG. 12 shows another method for determining whether a user has purchased a product after picking it up. The determination method in FIG. 12 determines that a user has purchased a product, when the user has left the store and has brought the product back to the user's home. As shown in FIG. 4, an in-home reader 8 that is associated with a user ID is placed in the user's home.

When a user has brought a product to the user's home after purchasing it in the store, the user application of the user terminal 2 transmits position information on the user terminal 2, to the application server 5 (step S20). Here, the user terminal 2 obtains the position information from the GPS receiver 26. Moreover, the in-home reader 8 reads a device ID from the communication device 7A attached on the purchased product, and transmits the device ID to the application server 5 (step S22).

In a case in which the position information on the user terminal 2 matches the information on address recorded in the user profile database, the application server 5 determines that the user of the user terminal 2 is in the user's home. In addition, it is also determined that the product of the product code corresponding to the device ID, which is received from the in-home reader 8 of the user, is in the user's home. Thus, when both of the user and the product are in the user's home (step S24: YES), it is determined that the user has purchased the corresponding product, and the user behavior database is updated (step S26). Specifically, a value is written in each field of the product code of the purchased product and the date of purchase in the user behavior database.

### (B) Movements of User at Home (FIG. 13)

As described above, the communication device 7A, which is attached on a product, preferably has a function of detecting an open action. The provided function of detecting an open action enables identifying a correct use start date even when a date of purchase and a use start date are separated from each other, such as when a user purchases products in bulk. The communication device 7A shown in FIG. 2 detects opening of a product, for example, when the control unit 71 fails to receive a signal from the third detecting unit 72c disposed at a cap of the product. In the case in which opening of the product is detected, a transmission signal from the communication device 7A to the in-home reader 8 contains information indicating detection of opening.

Upon recognizing opening of a product in a user's home based on a transmission signal from the communication device 7A, which is attached on the product (step S30: YES), the in-home reader 8 transmits an opening notification (which is also referred to as a "use start notification") to the application server 5 (step S32). The opening notification contains a user ID and a device ID. The application server 5 that has received the opening notification updates the user behavior database, based on the user ID and the device ID contained in the opening notification (step S34). Specifically, a value is written in the "USE DATE" field of the purchased product in the user behavior database.

Each time the communication device 7B, which is attached on the product, detects a touch of a person (step S36: YES), the in-home reader 8 transmits a use notification to the application server 5 (step S38). That is, when a user touches a product in using the product, the communication device 7A, which is attached on the product, detects a touch of the person. Thus, a transmission signal from the communication device 7A to the in-home reader 8 contains the device ID and information indicating detection of a touch of the person. Then, the in-home reader 8 transmits a use notification containing the user ID and the device ID, to the application server 5. The application server 5 that has received the use notification updates the user behavior database (step S40). Specifically, a value is written in the "USE DATE" field of the purchased product in the user behavior database. A value is additionally written in the "USE DATE" field each time the user uses the product, and therefore, the application server 5 obtains information on one or both of the number of times of use and a frequency of use of the product by the user.

Unless a predetermined use end condition is satisfied, the processes in steps S36 to S40 are repeated (step S42: NO). Herein, the use end condition may be any condition in which use of the product can be presumed to be finished. For example, for a container product containing contents, such as a cosmetic item, the number of times of use until the container becomes empty, in accordance with the quantity of the contents, is statistically known. Thus, it can be determined that the use end condition is satisfied, when the product is used a predetermined number of times. Alternatively or in addition, it may be determined that the use end condition is satisfied, when a new use notification is not received after a predetermined number of days has passed from the last reception of the use notification. This is because it is presumed that the in-home reader 8 cannot receive a signal due to the user discarding the product, in this situation.

When the predetermined use end condition is satisfied (step S42: YES), the application server 5 transmits, for example, an electronic coupon, to the user application of the user terminal 2 (step S44). The electronic coupon (an example of predetermined information on a product) is, for example, information for receiving a discount in purchasing a new product as a replacement for the used product. Providing an electronic coupon to the user application is intended to encourage the user to continuously purchase and use the certain product.

The user application causes the user terminal 2 to show the received electronic coupon (step S46). The information that is provided in step S44 is not limited to an electronic coupon, and for example, information on a launch of a new product may be provided.

As described above, in the user behavior tracking system 1A of this embodiment, a communication device 7A for detecting a touch of a person is attached on each product in the store, whereby it is possible to understand whether a certain user has picked up a product in the store. Thus, it can be understood what kind of product in the certain store a user, who is an end consumer, is interested in (or, attracted by). In addition, it is determined whether a user has purchased a product after picking it up, based on the in-store reader, position information on each user, or the like. This allows it to understand whether the user in the store has finally purchased the product or has returned it to the product shelf instead of purchasing after picking it up with an interest. Thus, the user behavior tracking system 1A provides useful marketing information based on the behavior of the user in the store.

Moreover, in the user behavior tracking system 1A of this embodiment, the in-home reader, which is placed at a user's home, detects a start time of using a product by the user and whether the user has touched the product, from the communication device 7A of the product in the user's home. The in-home reader sequentially notifies them to the application server 5. This allows it to recognize a start date (start time) of using the product by the user in home and the number of times of use or a frequency (state) of use of the product. That is, it is possible to understand the actual condition of using a product by a certain user and to obtain useful marketing information.

Unfortunately, manufacturers of consumer goods have difficulty in understanding in what type of store an end consumer purchases a product and how the end consumer uses the purchased product, in selling consumer goods. Such a problem can be solved by the user behavior tracking system 1A.

### (2) Second Embodiment

Next, a user behavior tracking system 1B of a second embodiment will be described. In describing this embodiment, the same elements as in the user behavior tracking system 1A of the first embodiment are denoted by the same reference signs, and redundant descriptions are omitted.

### (2-1) System Configuration of User Behavior Tracking System of Second Embodiment

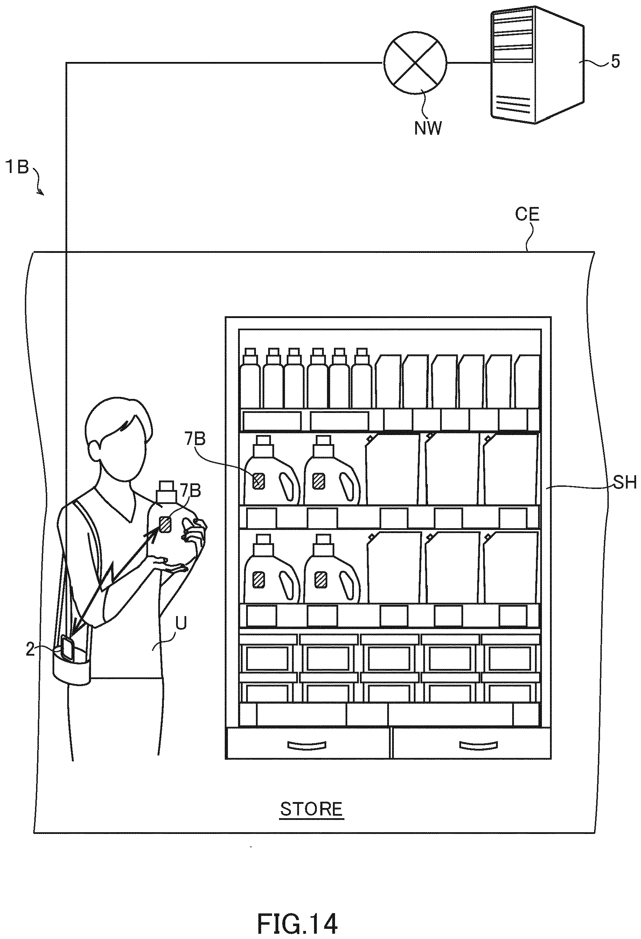

First, a system configuration of the user behavior tracking system 1B of this embodiment will be described with reference to FIGs. 14 to 16. FIG. 14 schematically shows a system configuration of the user behavior tracking system 1A of this embodiment. In FIG. 14, a situation in which a user "U" is in a store furnished with a product shelf SH, is installed, as in the case shown in FIG. 1.

In the user behavior tracking system 1B, a communication device 7B that is attached on each product in the store differs from the communication device 7A in having a wireless communication function instead of a radio tag. The wireless communication protocol is not limited, but for example, it may be BLE communication.

Although the structure of the communication device 7B can be the same as or similar to that illustrated in FIG. 2, the radio tag 73A is not necessary, and instead, a communication unit 73B for performing BLE communication is provided.

In this embodiment, the user terminal 2 directly communicates with the communication device 7B by BLE wireless communication. Specifically, the user terminal 2 is paired with a communication device 7B that is positioned in proximity to the own terminal, by using BLE communication, and it starts wireless communication. Due to limitation in the wireless communication range with BLE communication, the user terminal 2 that is located in an area in which it is able to wirelessly communicate with the communication device 7B, can be determined as being positioned in proximity to the communication device 7B.

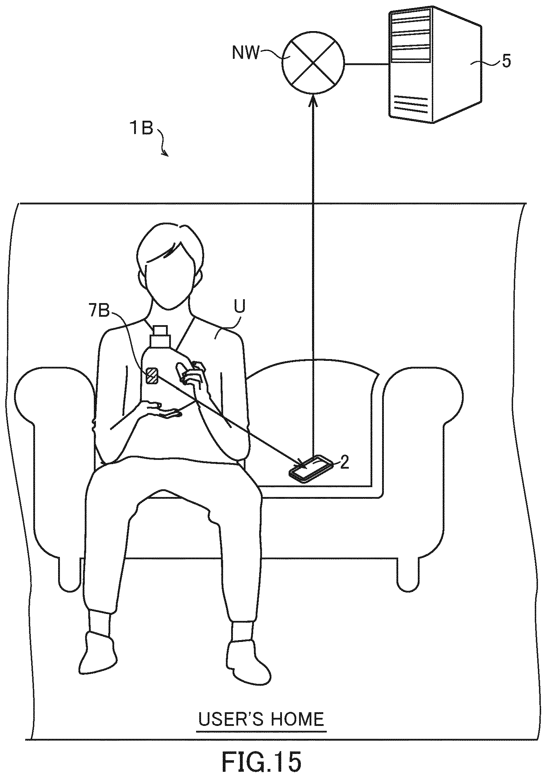

FIG. 15 schematically shows a system configuration of the user behavior tracking system 1B in a situation in which a user has brought a product home after purchasing it in the store.

Although the user is at home, the user terminal 2 is capable of communicating with the application server 5 via the network NW, in the same manner as in FIG. 4. In this embodiment, the communication device 7B, which is attached on a product, wirelessly communicates with the user terminal 2, also at the home of the user "U," which eliminates the need for the in-home reader 8 (refer to FIG. 4). In this embodiment, the application server 5 is an example of an information processing device.

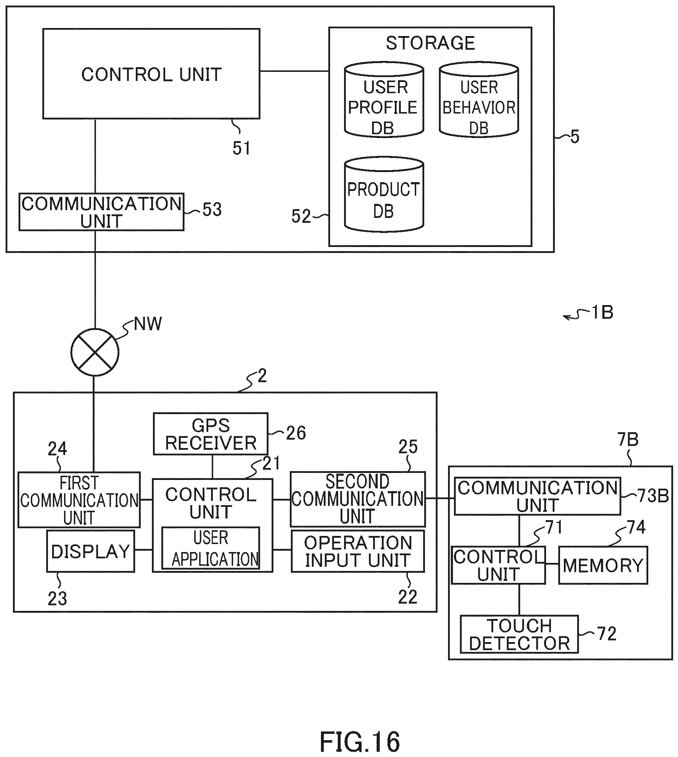

FIG. 16 is a block diagram of each device included in the user behavior tracking system 1B of this embodiment.

As shown in FIG. 16, in this embodiment, the second communication unit 25 of the user terminal 2 and a communication unit 73B of the communication device 7B communicate with each other, for example, by BLE wireless communication.

In the configuration example shown in FIG. 16, upon detecting a touch of a person, the communication device 7B transmits a device ID and information indicating detection of a touch of a person, to the user terminal 2. Then, the user application of the user terminal 2 transmits a touch notification to the application server 5. The communication device 7B may be triggered to start communication, by detection of a touch of a person.

On the basis of position information obtained from the GPS receiver 26, the user application of the user terminal 2 transmits a purchase notification to the application server 5, when the user terminal 2 is located outside the store and is paired (that is, communication is established) with the communication device 7B.

In a state in which the user terminal 2 is in the user's home, the user application of the user terminal 2 transmits a use notification to the application server 5 upon receiving information indicating detection of a touch of a person from the communication device 7B. As in the case of the first embodiment, each of a touch notification, a purchase notification, an opening notification (use start notification), and a use notification contains a user ID and a device ID.

### (2-2) Operation of User Behavior Tracking System of This Embodiment

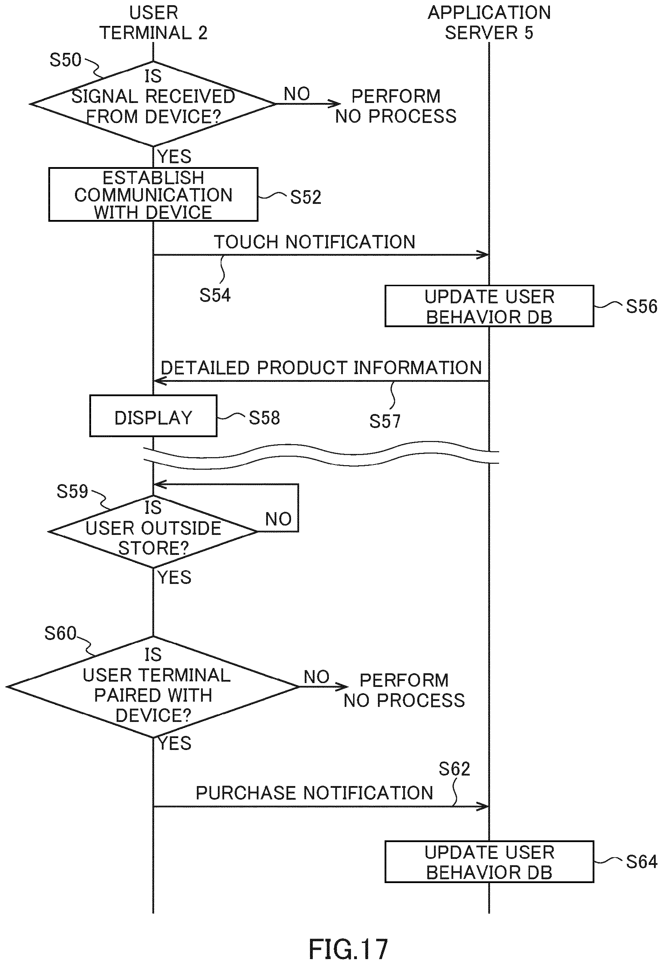

Next, an operation of the user behavior tracking system 1B of this embodiment will be described with reference to FIGs. 17 to 19.

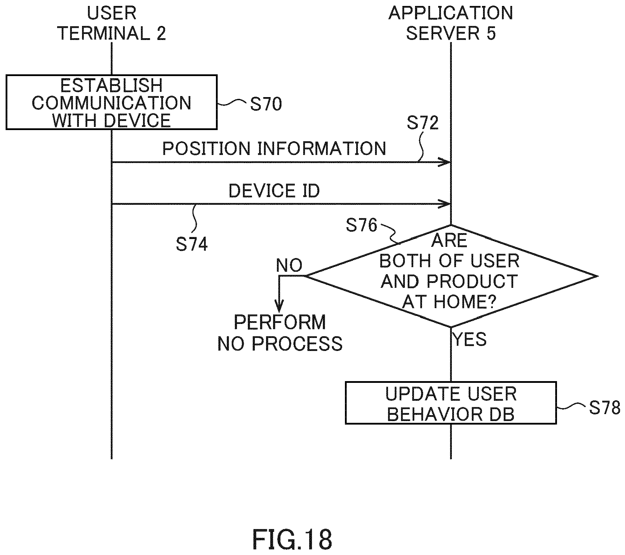

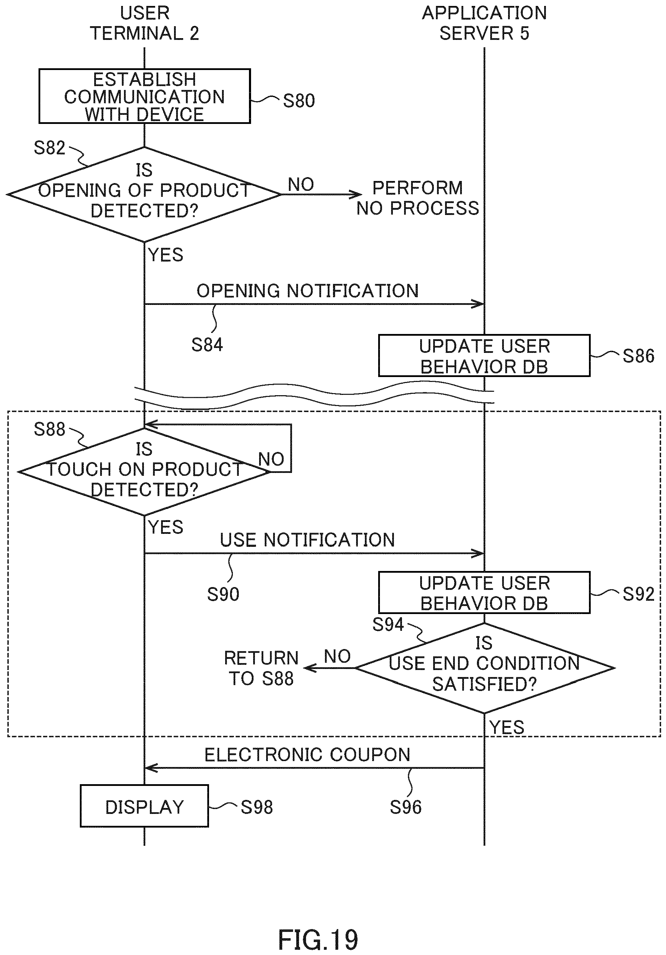

FIG. 17 is a sequence chart showing an operation of the user behavior tracking system 1B when a user has picked up a product in the store and when the user has purchased the product. FIG. 18 is a sequence chart in a case in which the application server 5 determines that a user has purchased a product, which is different from that in FIG. 17. FIG. 19 is a sequence chart of the user behavior tracking system 1B in a case of monitoring a state of use of a product that is purchased by a user.

### (A) Operation in Store (FIGs. 17 and 18)

A communication device 7B that is attached on each product disposed on product shelves in the store detects a touch of a person. In response to this, the user application of the user terminal 2 in the store receives a device ID and information indicating detection of a touch on the product by a person, from the communication device 7B (step S50: YES).

The user terminal 2 is then paired with the communication device 7B from which the signal is received in step S50, to establish communication therewith (step S52). The user application of the user terminal 2 transmits a touch notification that contains a user ID and the device ID, which is received in step S50, to the application server 5 (step S54). In a state in which a plurality of users are located around a product shelf, and the users pick up respective products, the user application may obtain a plurality of product codes corresponding to device IDs of a plurality of communication devices 7B from the application server 5, and it may ask a user to select a product code of the product that the user himself or herself picks up, among the plurality of product codes. This enables user applications of the plurality of users to associate a user ID and a device ID with each other.

In a state in which a plurality of users are located around a product shelf, the application server 5 may associate a user ID and a device ID with each other, based on the number of times or a frequency that the user terminal 2 receives a device ID and information indicating detection of a touch on a product by a person from the communication device 7B, a status of communication established between the user terminal 2 and the communication device 7B, or other parameter.

Upon receiving the touch notification, the application server 5 refers to the product database to identify a product code corresponding to the device ID contained in the touch notification, and then updates the user behavior database based on the user ID contained in the touch notification and the identified product code (step S56). Specifically, a value is written in each field of the device ID, the product code of the touched product, and the date of touch in a new record in the user behavior database.

Then, the application server 5 reads detailed product information corresponding to the product code of the touched product from the product database, and transmits it to the user application of the corresponding user ID (step S57). The user application displays the detailed product information on the user terminal 2 (step S58). This makes it possible for a user to timely check the detailed information on the product that the user has picked up with an interest.

Whether the user has purchased the product after picking it up, can be determined based on whether both of the user and the product are located outside the store. That is, when the user terminal 2 is located outside the store based on position information obtained from the GPS receiver 26 (step S59: YES) and is paired (that is, establishes communication) with the communication device 7B, the user application transmits a purchase notification to the application server 5 (step S62).

Upon reception of the purchase notification, the application server 5 updates the user behavior database based on the user ID and the device ID contained in the purchase notification (step S64). Specifically, a value is written in each field of the product code of the purchased product and the date of purchase in the user behavior database.

FIG. 18 shows another method for determining whether a user has purchased a product after picking it up. The determination method in FIG. 18 determines that a user has purchased a product, when the user has left the store and has brought the product back to the user's home.

When a user has brought a product to the user's home after purchasing it in the store, the user application of the user terminal 2 transmits position information on the user terminal 2 that the user terminal obtains from the GPS receiver 26, to the application server 5 (step S72). Moreover, the user application receives a device ID from the communication device 7B attached on the purchased product, and it transmits the device ID to the application server 5 (step S74).

In a case in which the position information on the user terminal 2 matches the information on address recorded in the user profile database, the application server 5 determines that the user of the user terminal 2 is in the user's home. In addition, it is also determined that the product of the product code corresponding to the device ID, which is received from the user application of the user, is in the user's home. Thus, when both of the user and the product are in the user's home (step S76: YES), it is determined that the user has purchased the corresponding product, and the user behavior database is updated (step S78). Specifically, a value is written in each field of the product code of the purchased product and the date of purchase in the user behavior database.

### (B) Movements of User at Home (FIG. 19)

As described above, the communication device 7B, which is attached on a product, preferably has a function of detecting an open action, as in the case of the communication device 7A. In the case in which opening of the product is detected, a transmission signal from the communication device 7B to the user terminal 2 contains information indicating detection of opening.

Upon recognizing opening of a product based on a transmission signal from the communication device 7B, which is attached on the product in the user's home (step S82: YES), the user application of the user terminal 2 transmits an opening notification (use start notification) to the application server 5 (step S84). The opening notification contains a user ID and a device ID. The application server 5 that has received the opening notification updates the user behavior database, based on the user ID and the device ID contained in the opening notification (step S86). Specifically, a value is written in the "USE DATE" field of the purchased product as the start time of using the product, in the user behavior database.

Each time the communication device 7B, which is attached on the product, detects a touch of a person (step S88: YES), the user application receives the device ID and information indicating detection of a touch of a person, from the communication device 7B. Then, the user application transmits a use notification to the application server 5 (step S90). The use notification contains the user ID and the device ID. The application server 5 that has received the use notification updates the user behavior database (step S92). Specifically, a value is written in the "USE DATE" field of the purchased product in the user behavior database. A value is additionally written in the "USE DATE" field each time the user uses the product, and therefore, the application server 5 obtains information on one or both of the number of times of use and a frequency of use of the product by the user.

Unless a predetermined use end condition is satisfied, the processes in steps S88 to S92 are repeated (step S94: NO). When the predetermined use end condition is satisfied (step S92: YES), the application server 5 transmits, for example, an electronic coupon, to the user application of the user terminal 2 (step 96). The user application causes the user terminal 2 to show the received electronic coupon (step S98).

As described above, the user behavior tracking system 1B of this embodiment also provides effects that are the same as or similar to the effects obtained by the user behavior tracking system 1A. Specifically, it is possible to understand what kind of product in a certain store a user, who is an end consumer, is interested in (is attracted by). Moreover, it is also possible to understand whether the user in the store has finally purchased the product or has returned it to a product shelf instead of purchasing after picking it up with an interest. Thus, useful marketing information is obtained based on the behavior of the user in the store.

In addition, a start time of using the product by the user in home and the number of times of use or a frequency of use of the product can be understood. That is, it is possible to understand the actual condition of using a product by a certain user and to obtain useful marketing information.

Although embodiments of the information processing system, the information processing device, the information processing method, and the program of the present invention are described above, the present invention should not be limited to the foregoing embodiments. In addition, the embodiments described above can be variously modified and altered and can be combined with each other, within the scope not departing from the gist of the present invention.

Although the in-store reader 6 and the in-home reader 8 read the radio tag 73A of the communication device 7A in the first embodiment, the method of communication is not limited thereto. The communication device 7A may wirelessly communicate with each of the in-store reader 6 and the in-home reader 8, for example, by using BLE communication.

In the embodiments and the modification examples described above, at least one of the functions of the application server 5 may be implemented by software of the user terminal 2, and at least one of the functions of the user terminal 2 may be implemented by software of the application server 5. In addition, each of the functions of the user terminal 2 and each of the functions of the application server 5 may be implemented by allocating them to the user terminal 2 and the application server 5, as necessary. The functions that are executed by the application server 5 may be executed by allocating them to a plurality of devices.

Similarly, at least one of the functions of the application server 5 may be implemented by software of the edge device 4, and at least one of the functions of the edge device 4 may be implemented by software of the application server 5. In this case, at least one of databases (e.g., a product database) stored in the application server 5 is stored also in the edge device 4. In addition, each of the functions of the edge device 4 and each of the functions of the application server 5 may be implemented by allocating them to the user terminal 2 and the application server 5, as necessary.

The type of the communication device is not limited to that described in relation to the foregoing embodiments. In an embodiment, the communication device may be a tag that performs energy harvesting to generate power based on radio waves in surrounding environment (e.g., radio waves of wireless communication surrounding the tag), and operates by the generated power that is internally stored.

The present invention is related to Japanese Patent Application No. 2021-000786 filed with the Japan Patent Office on January 6, 2021, the entire contents of which are incorporated into this specification by reference.

## Claims

1. An information processing system comprising:
a user terminal carried by a user;
a communication device being attached on a product in a store and including a sensor and a storage, the sensor configured to detect a touch on the product by a person, the storage storing unique identification information; and
an information processing device being capable of communicating with the user terminal,
the information processing device comprising
a control unit configured to, when a detecting device, which is the communication device that has detected a touch on the product by a person, is present in the store, associate user information on the user terminal positioned in proximity to the detecting device, with the identification information on the detecting device.

2. The information processing system according to claim 1, wherein the control unit is configured to transmit information on the product attached with the detecting device, to the user terminal, when the user terminal is positioned in proximity to the detecting device.

3. The information processing system according to claim 1 or 2, wherein the control unit is configured to, when the user terminal and the detecting device are located outside the store,
determine that the user has purchased the product attached with the detecting device, and associate the user information on the user terminal with the identification information on the detecting device.

4. The information processing system according to claim 1 or 2, wherein the control unit is configured to, when the user terminal and the detecting device are located at a place that is associated with the user,
determine that the user has purchased the product attached with the detecting device, and associate the user information on the user terminal with the identification information on the detecting device.

5. The information processing system according to claim 4, wherein the control unit is configured to obtain information on a number of times or a frequency that a touch on the purchased product by a person is detected, when the user terminal and the detecting device are located at the place.

6. The information processing system according to claim 5, wherein
the product is a container product containing contents,
the sensor is configured to detect opening of the product, and
the control unit is configured to obtain information on the number of times or the frequency that a touch on the purchased product by a person is detected, after the sensor detects opening of the purchased product.

7. The information processing system according to any one of claims 3 to 6, wherein the control unit is configured to provide predetermined information on the product to the user terminal, in a case in which the purchased product satisfies a predetermined use end condition.

8. The information processing system according to any one of claims 1 to 7, wherein
the communication device includes a radio tag,
the information processing system further comprises:
a reader being placed in the store and being capable of communicating with the information processing device, the reader configured to read the radio tag of the communication device; and
a position identification device being capable of communicating with the information processing device and configured to identify a position of the user terminal, and
the control unit is configured to determine that the user terminal is positioned in proximity to the detecting device, when a distance between the position of the user terminal, which is identified by the position identification unit, and a position of the reader that has read the radio tag of the detecting device, is a predetermined value or less.

9. The information processing system according to claim 8, wherein the control unit is configured to associate the user information on the user terminal with the identification information on the detecting device, in a state in which:
the detecting device, which is the communication device having detected a touch on the product by a person, is present in the store, and
the reader fails to read the detecting device, and the user terminal that is positioned in proximity to the detecting device is separated from the reader, substantially at the same time.

10. The information processing system according to any one of claims 1 to 7, wherein
the communication device includes a communication unit configured to wirelessly communicate with the user terminal,
the information processing device is capable of communicating with the user terminal, and
the control unit is configured to, when the user terminal can wirelessly communicate with the detecting device, determine that the user terminal is positioned in proximity to the detecting device.

11. The information processing system according to any one of claims 1 to 10, wherein the sensor is at least one of a capacitive sensor, an acceleration sensor, and a pressure sensitive sensor.

12. An information processing device being capable of communicating with a user terminal carried by a user in a store,
a communication device being attached on a product in the store and including a sensor and a storage, the sensor configured to detect a touch on the product by a person, the storage storing unique identification information,
the information processing device comprising
a control unit configured to, when a detecting device, which is the communication device that has detected a touch on the product by a person, is present in the store, associate user information on the user terminal positioned in proximity to the detecting device, with the identification information on the detecting device.

13. An information processing method using a communication device that is attached on a product in a store, the communication device including a sensor and a storage, the sensor configured to detect a touch on the product by a person, the storage storing unique identification information,
the method comprising, by an information processing device that is capable of communicating with a user terminal carried by a user,
determining whether a detecting device, which is the communication device that has detected a touch on the product by a person, is present in the store,
determining whether the user terminal is positioned in proximity to the detecting device, and
associating user information on the user terminal with the identification information on the detecting device, in a state in which the detecting device is present in the store, and the user terminal is positioned in proximity to the detecting device.

14. A program configured to cause a computer to execute a predetermined method, in a state in which a communication device is attached on a product in a store, the communication device including a sensor and a storage, the sensor configured to detect a touch on the product by a person, the storage storing unique identification information,
the method comprising:
determining whether a detecting device, which is the communication device that has detected a touch on the product by a person, is present in the store;
determining whether a user terminal that is carried by a user is positioned in proximity to the detecting device; and
associating user information on the user terminal with the identification information on the detecting device, in a state in which the detecting device is present in the store, and the user terminal is positioned in proximity to the detecting device.
